# NEUE EUROPÄISCHE PATENTSCHRIFT

(11) **EP 3 276 212 B2**
(45) Veröffentlichungstag und Bekanntmachung des Hinweises auf die Entscheidung über den Einspruch: **02.12.2026**
(45) Hinweis auf die Patenterteilung: 16.09.2020
(21) Anmeldenummer: 16181746.5
(22) Anmeldetag: 28.07.2016
(51) Int. Cl.: F16H 57/00, F16D 1/06

(54) **VERBINDUNGSANORDNUNG ZUM VERBINDEN EINES BAUTEILS WIE EINER WELLE, NABE, BUCHSE ODER DERGLEICHEN MIT EINEM ZAHNRAD, WOBEI DAS ZAHNRAD EINE SCHRÄGVERZAHNUNG AUFWEIST**
CONNECTION ASSEMBLY FOR CONNECTING A COMPONENT, SUCH AS A SHAFT, HUB, SOCKET OR THE LIKE WITH A GEARWHEEL WITH THE COGGED GEAR HAVING HELICAL GEAR TEETH
SYSTEME DE RACCORDEMENT D'UN COMPOSANT TEL UN ARBRE, UN MOYEU, UNE DOUILLE OU SIMILAIRE A UNE ROUE DENTEE, LA ROUE DENTEE PRESENTANT UNE DENTURE HELICOÏDALE

(43) Veröffentlichungstag der Anmeldung: 31.01.2018
(73) Patentinhaber: IMS Gear SE & Co. KGaA, 78166 Donaueschingen (DE)
(72) Erfinder: Stoppel, Eugen, 78357 Mühlingen (DE); Oberle, Stephan, 78050 Villingen-Schwenningen (DE); Seidel, Manuel, 78083 Dauchingen (DE)
(74) Vertreter: Westphal, Mussgnug & Partner Patentanwälte mbB

(56) Entgegenhaltungen:
- EP-A1- 1 777 439
- EP-A1- 2 381 136
- EP-A1- 3 023 630
- EP-A1- 3 023 630
- WO-A1-02/059505
- WO-A1-02/059505
- WO-A1-2016/163884
- WO-A1-2016/163884
- DE-A1- 10 111 900
- DE-A1- 10 111 900
- DE-A1- 10 217 908
- DE-A1- 102007 005 667
- DE-A1- 102007 005 667
- JP-A- 2007 285 466
- US-A- 4 410 120
- US-A- 4 410 120
- US-A- 4 778 303
- US-A- 4 778 303
- US-A- 5 503 494
- US-A- 5 503 494
- US-A1- 2008 016 974
- US-A1- 2016 017 976
- Konstruktion&Entwicklung09/2011
- Konstruktionspraxis18.02.2011
- VORB1
- VORB2
- VORB3
- VORB4
- Techopedia Office Automation
- Wikipedia Office Automation

## Beschreibung

Die vorliegende Erfindung betrifft eine Vorrichtung zum Übertragen einer Drehbewegung, umfassend ein drehbares Bauteil wie eine drehbare Welle, Nabe, Buchse oder dergleichen und ein Zahnrad, wobei das Zahnrad und das drehbare Bauteil mit einer Verbindungsanordnung verbunden sind. Mit der Verbindungsanordnung kann das Zahnrad drehfest mit dem Bauteil verbunden werden, so dass ein Drehmoment übertragen werden kann.

Schrägverzahnungen weisen gegenüber einer Geradverzahnung unter anderem folgende Vorteile auf: Es kann eine bessere Laufruhe und eine geringere Geräuschentwicklung mit Schrägverzahnungen erzielt werden, da jedes Zahnpaar mit einem kontinuierlichen Übergang ineinander eingreift und somit die Drehmomentübertragung gleichmäßiger erfolgt als bei Geradverzahnungen. Darüber hinaus sind gegenüber einem geradverzahnten Zahnpaar mit vergleichbaren Abmessungen und gleicher Zähnezahl die Zahnfuß- und die Grübchentragfähigkeit etwas größer.

Bei einer Schrägverzahnung werden nicht nur bezogen auf die Drehachse tangential, sondern auch axial wirkende Kräfte übertragen. Insbesondere bei elektrischen Lenkeinrichtung von Kraftfahrzeugen treten häufig sehr hohe axial wirkende Kräfte auf, weshalb das Zahnrad entsprechend stark axial belastet wird. Aufgrund der axialen Belastung wird ein Kippmoment in das Zahnrad eingebracht, wodurch sich das Zahnrad verformt und die Laufruhe und die Geräuschentwicklung negativ beeinflusst werden. Weiterhin kommt es zu Fehleingriffen und die Lebensdauer des Zahnrads wird verringert.

Ein bekanntes Beispiel für derartige Verbindungsanordnungen sind Wellen-Naben-Verbindungen, bei denen axiale Belastungen zumindest teilweise häufig dadurch übertragen werden, dass das vom Zahnrad umschlossene Bauteil, insbesondere die Welle, einen Absatz aufweist, an dem die Nabe des Zahnrads anliegt. Hierdurch kommt es aber zu einer punktuellen Belastung der Verbindungsanordnung, welche zu einem Kippmoment führt, wodurch sich das Zahnrad vom Bauteil, beispielsweise von der Welle, Nabe, Buchse oder dergleichen lösen kann. Je nach Gestaltung des Zahnrads kann es zu einem sogenannten Abheben oder zu einem Überspringen des Zahnrads in Bezug auf die Nabe kommen. Während eine verschlechterte Laufruhe und eine erhöhte Geräuschentwicklung keinen wesentlichen Einfluss auf die Funktionsfähigkeit der Drehmomentübertragung vom Bauteil auf das Zahnrad und das Zahnpaar haben, ist eine Drehmomentübertragung bei einem Versagen der Verbindungsanordnung nicht mehr möglich.

Weitere Verbindungsanordnungen sind in der US 2016/0017976 A1, der DE 101 11 900 A1, der WO 2002/059505 A1, der US 5 503 494 A und der DE 10 2007 005 667 A1 offenbart.

Um die Belastung der Verbindungsanordnung zu reduzieren, kann der Zahnschrägungswinkel der Schrägverzahnung reduziert werden. Hierdurch wird aber der eingangs genannte Vorteil der Schrägverzahnung, insbesondere die gleichmäßige Drehmomentübertragung und die geringe Geräuschentwicklung, zum größten Teil wieder aufgehoben. Die Belastung der Verbindungsanordnung kann durch die Verwendung von sehr steifen Materialien, beispielsweise durch die Verwendung von Stahl, reduziert werden, allerdings werden hierdurch im Vergleich zu weichen Materialien wie Kunststoff die Fertigungskosten, das Gewicht und die Geräuschentwicklung erhöht.

Aufgabe einer Ausführungsform der vorliegenden Erfindung ist es daher, eine Vorrichtung mit einer Verbindungsanordnung anzugeben, wobei die Verbindungsanordnung unabhängig vom für das Bauteil, insbesondere für die Welle, Nabe, Buchse oder dergleichen, und für das Zahnrad verwendeten Material im Vergleich zu bekannten Verbindungsanordnungen eine erhöhte Belastbarkeit aufweist.

Diese Aufgabe wird mit den ln den Ansprüchen 1 und 6 angegebenen Merkmalen gelöst. Vorteilhafte Ausführungsformen sind Gegenstand der Unteransprüche.

Eine Ausführungsform der Erfindung betrifft eine Vorrichtung zum Übertragen einer Drehbewegung, umfassend ein drehbares Bauteil und ein Zahnrad, wobei das Zahnrad und das Bauteil mit einer Verbindungsanordnung verbunden sind. Das Zahnrad weist eine Schrägverzahnung mit einem auf die Drehachse des Zahnrads gezogenen Zahnschrägungswinkel β und einen ersten Verbindungsabschnitt und das Bauteil einen zweiten Verbindungsabschnitt auf, mit welchem das Bauteil mit dem ersten Verbindungsabschnitt verbunden ist, wobei das Bauteil zumindest im zweiten Verbindungsabschnitt zumindest eine mit dem ersten Verbindungsabschnitt in Wirkverbindung stehende Vertiefung oder Erhöhung aufweist, wenn das Bauteil mit dem ersten Verbindungsabschnitt verbunden ist, wobei der erste Verbindungsabschnitt mit der oder den Vertiefungen korrespondierende Vorsprünge oder mit der oder den Erhöhungen korrespondierende Ausnehmungen und die Vertiefung oder die Erhöhung einen Verbindungsschrägungswinkel α aufweist.

Dabei ist der Verbindungsschrägungswinkel α wie folgt definiert: $0 ° < α < β .$

Sowohl der Verbindungsschrägungswinkel α als auch der Zahnschrägungswinkel β beziehen sich auf die Drehachse, um welche sich das Bauteil und das Zahnrad drehen. Dadurch, dass die zumindest eine Vertiefung oder eine Erhöhung den Verbindungsschrägungswinkel α aufweist, können entlang der gesamten Vertiefung oder Erhöhung beispielsweise im Gegensatz zu häufig verwendeten Keilwellenverbindungen auch Axialkräfte zwischen dem Zahnrad und dem Bauteil übertragen werden. Aufgrund der hieraus resultierenden gleichmäßigeren Belastung werden eine punktförmige Belastung zumindest deutlich verringert und das Kippmoment, welches zu den oben genannten Versagensarten wie dem Abheben und dem Überspringen führt, deutlich reduziert, so dass die Gefahr eines Versagens der Verbindungsanordnung sinkt. Es ist zudem ebenfalls möglich, über die erfindungsgemäß ausgestaltete Verbindungsanordnung höhere Drehmomente und axiale Kräfte zu übertragen. Folglich können sowohl das Bauteil als auch das Zahnrad bei einem gegebenen zu übertragenden Drehmoment und bei einer gegebenen axialen Belastung kleiner dimensioniert und damit materialsparender ausgestaltet werden.

Erfindungsgemäß weisen der Verbindungsschrägungswinkel α und der Zahnschrägungswinkel β denselben Drehsinn auf. Der Drehsinn ist bezogen auf die Drehachse und ergibt sich aus der Richtung, in welche eine Gerade ausgehend von der Drehachse um einen durch die Drehachse verlaufenden Drehpunkt um den Betrag des Verbindungsschrägungswinkels oder des Zahnschrägungswinkels gedreht werden muss, um parallel zur Vertiefung bzw. Erhöhung oder zur Schrägverzahnung zu verlaufen. Weisen der Verbindungsschrägungswinkel und der Zahnschrägungswinkel denselben Drehsinn auf, ist es möglich, eine besonders gleichmäßige Belastung der Verbindungsanordnung zu realisieren, wodurch die Versagensneigung der Verbindungsanordnung weiter reduziert werden kann.

Eine weitere Ausführungsform zeichnet sich dadurch aus, dass das Bauteil im zweiten Verbindungsabschnitt eine Anzahl von Vertiefungen oder Erhöhungen und die Schrägverzahnung des Zahnrads dieselbe Anzahl von Zähnen aufweist. Diese Ausführungsform bietet sich insbesondere dann an, wenn der Durchmesser des Bauteils im zweiten Verbindungsabschnitt bzw. der Durchmesser des Zahnrads im ersten Verbindungsabschnitt nur geringfügig geringer sind als der Durchmesser der Schrägverzahnung. In diesem Fall ist die Wandstärke des Zahnrads relativ gering, so dass es für den Fall, dass die Anzahl der Vertiefungen oder Erhöhungen und die Anzahl der Zähne gleich gewählt sind, die Schwankungen der Wandstärke des Zahnrads gering gehalten werden können. In einer Schnittebene senkrecht zur Drehachse hat das Zahnrad dann annäherungsweise die Form eines die Drehachse umgebenden wellenförmigen Kreisrings. Aufgrund der weitgehend konstanten und gleichmäßigen Wandstärke des Zahnrads werden Spannungsspitzen und Versagensstellen vermieden, wodurch die Festigkeit des Zahnrads erhöht wird.

Nach einer weiteren Ausführungsform ist das Zahnrad aus einem weicheren Material gefertigt als das Bauteil. Wenn das Zahnrad aus einem weichen Material, beispielsweise Kunststoff, gefertigt ist, kann im Vergleich zu einer Fertigung aus einem harten Material, beispielsweise Stahl, die Geräuschentwicklung verringert werden. Zudem kann das weichere Material so gewählt werden, dass die im Betrieb auftretenden Belastungen besonders gut aufgenommen und die Fertigung des Zahnrads besonders einfach gehalten werden können. Dabei kann es sich auch anbieten, das Zahnrad mithilfe eines Spritzgussverfahrens zu fertigen und während der Fertigung um das Bauteil zu umspritzen. In diesem Fall entfällt ein separater Schritt der Herstellung der Verbindungsanordnung, was die Fertigung verkürzt und damit kostengünstiger macht.

Es bietet sich an, dass das Zahnrad einen Zahnkranz, in welchem die Schrägverzahnung angeordnet ist, und ein Verbindungsteil, welches den ersten Verbindungsabschnitt umfasst, aufweist, und der Zahnkranz aus einem weicheren Material als das Verbindungsteil gefertigt ist. Der außen liegende Zahnkranz umschließt dabei das Verbindungsteil. Wie zuvor erwähnt, lässt sich beispielsweise die Geräuschentwicklung dadurch reduzieren, dass das Zahnrad aus einem weicheren Material als das Bauteil gefertigt wird. In vielen Fällen führen aber die eingangs erwähnten axialen Belastungen bei der Verwendung von weichen Materialien zu großen Verformungen des Zahnrads, so dass die Neigung zum Abheben und zum Überspringen erhöht wird, je weicher das eingesetzte Material. In dieser Ausführungsform ist es möglich, den Zahnkranz aus einem weicheren Material als das Verbindungsteil zu fertigen, so dass einerseits die Geräuschentwicklung gering gehalten werden kann, ohne andererseits eine zu starke Verformung des Zahnrads in Kauf nehmen zu müssen. Folglich können höhere axiale Kräfte von der Verbindungsanordnung aufgenommen werden, ohne dass dabei die Geräuschentwicklung ansteigt.

Weiterhin kann das Bauteil ein Nabenteil aufweisen, welches den zweiten Verbindungsabschnitt umfasst, wobei das Verbindungsteil zwischen dem Zahnkranz und dem Nabenteil angeordnet ist, und der Zahnkranz aus einem weicheren Material als das Verbindungsteil (34) und das Verbindungsteil aus einem weicheren Material als das Nabenteil (36) gefertigt sind. In dieser Ausgestaltung umfasst die Verbindungsanordnung insgesamt drei verschiedenen Materialien, so dass es besonders gut möglich ist, die jeweiligen Anforderungen an die betreffenden Teile des Zahnrads mit der Materialwahl zu berücksichtigen. Wie bereits oben erwähnt, kann die Geräuschentwicklung dadurch reduziert werden, dass für den Zahnkranz ein besonders weiches Material verwendet wird. Die Verformung des Zahnrads insgesamt kann dadurch verringert werden, dass ein im Vergleich zum Zahnkranz härteres Material für das Verbindungsteil verwendet wird. Die von der Verbindungsanordnung übertragbaren Drehmomente und Kräfte können dadurch gesteigert werden, dass das Nabenteil aus einem Material gefertigt wird, welches härter als das Material des Verbindungsteils ist.

Eine weitere Ausbildung der Erfindung betrifft eine elektrische Lenkreinrichtung für ein Kraftfahrzeug, umfassend eine Vorrichtung nach der zuvor beschriebenen Ausgestaltung. Die technischen Effekte und Vorteile, die sich mit der vorschlagsgemäßen Ausbildung der elektrischen Lenkeinrichtung erreichen lassen, entsprechen denjenigen, die für die verschiedenen Ausführungsformen der Verbindungsanordnung erörtert worden sind.

Beispielhafte Ausführungsformen der Erfindung werden im Folgenden unter Bezugnahme auf die beigefügten Zeichnungen näher erläutert. Es zeigen
- Figur 1: ein erstes Ausführungsbeispiel einer erfindungsgemäßen Vorrichtung zum Übertragen einer Drehbewegung mit einem Bauteil und einem Zahnrad,
- Figur 2a): eine Abwicklung eines zweiten Verbindungsabschnitts des in Figur 1 dargestellten Bauteil,
- Figur 2b): eine Abwicklung des in Figur 1 dargestellten Zahnrads,
- Figur 3: ein zweites Ausführungsbeispiel einer erfindungsgemäßen Vorrichtung zum Übertragen einer Drehbewegung mit einem Bauteil und einem Zahnrad,
- Figur 4: ein drittes Ausführungsbeispiel einer erfindungsgemäßen Vorrichtung zum Übertragen einer Drehbewegung mit einem Bauteil und einem Zahnrad,
- Figur 5: ein viertes Ausführungsbeispiel einer nicht zur Erfindung gehörigen Vorrichtung zum Übertragen einer Drehbewegung mit einem Bauteil und einem Zahnrad,
- Figur 6a): eine Abwicklung des zweiten Verbindungsabschnitts des in Figur 5 dargestellten Bauteils, und
- Figur 6b): eine Abwicklung des in Figur 5 dargestellten Zahnrads.

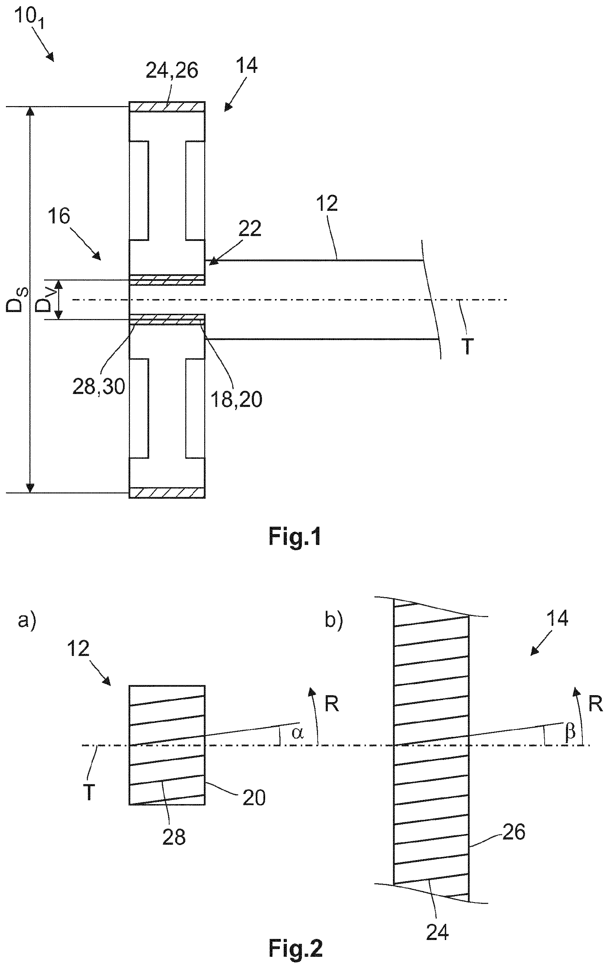

In Figur 1 ist ein erstes Ausführungsbeispiel einer Vorrichtung 10₁ zum Übertragen einer Drehbewegung anhand einer prinzipiellen Schnittdarstellung gezeigt. Die Vorrichtung 10₁ umfasst Bauteil 12, beispielsweise eine Welle, eine Nabe oder eine Buchse, welche um eine Drehachse T drehbar ist. Im dargestellten Beispiel soll es sich bei dem Bauteil 12 um eine Welle handeln. Weiterhin umfasst die Vorrichtung 10₁ ein Zahnrad 14, welches mittels einer Verbindungsanordnung 16 drehfest mit dem Bauteil 12 verbunden ist, so dass ein Drehmoment vom Bauteil 12 auf das Zahnrad 14 übertragen werden kann. Im dargestellten Ausführungsbeispiel ist die Verbindungsanordnung 16 als eine Wellen-Naben-Verbindung ausgeführt. Zur Ausbildung der Verbindungsanordnung 16 weisen das Zahnrad 14 einen ersten Verbindungsabschnitt 18 und das Bauteil 12 einen zweiten Verbindungsabschnitt 20 auf. Der zweite Verbindungsabschnitt 20 weist einen geringeren Durchmesser als die übrige Bauteil 12 auf, so dass ein Absatz 22 entsteht, mit welchem der erste Verbindungsabschnitt 18 und folglich das Zahnrad 14 axial in Bezug auf das Bauteil 12 positioniert wird. Das Zahnrad 14 umfasst eine Anzahl von Zähnen 24, die eine Schrägverzahnung 26 bilden. Aus Darstellungsgründen sind die Zähne 24 und die Schrägverzahnung 26 mittels einer Schraffur symbolisch kenntlich gemacht.

In Figur 2a) ist eine Abwicklung des zweiten Verbindungsabschnitts 20 des in Figur 1 gezeigten Bauteils 12 und in Figur 2b) eine Abwicklung des Zahnrads 14 dargestellt. In beiden Fällen schaut man auf den äußeren Umfang des zweiten Verbindungsabschnitts 20 des Bauteils 12 bzw. des Zahnrads 14. Die Zähne 24 der Schrägverzahnung 26 des Zahnrads 14 bilden einen Zahnschrägungswinkel β mit der Drehachse T. Auf dem zweiten Verbindungsabschnitt 20 des Bauteils 12 ist eine Anzahl von Vertiefungen 28 oder Erhöhungen 28 angeordnet, welche einen Verbindungsschrägungswinkel α mit der Drehachse T bilden. Im dargestellten Beispiel sind der Verbindungsschrägungswinkel α und der Zahnschrägungswinkel β gleich groß. Erfindungsgemäß ist der Verbindungsschrägungswinkel α kleiner als der Zahnschrägungswinkel β, jedoch größer als 0°. Sowohl der Zahnschrägungswinkel β als auch der Verbindungsschrägungswinkel α weisen denselben Drehsinn R in Bezug auf die Drehachse T auf.

Nicht dargestellt ist eine Ausführungsform, bei welcher die Vertiefungen 28 so ausgestaltet sind, dass sie einen Anschlag für das Bauteil 12 bilden, so dass der Absatz 22 nicht benötigt wird.

Das in Figur 1 dargestellte Zahnrad 14 ist vollständig aus einem Material gefertigt, beispielsweise aus Stahl oder Kunststoff. Unabhängig davon, ob das Zahnrad 14 aus Stahl oder Kunststoff gefertigt ist, kann der erste Verbindungsabschnitt 18 zu den Vertiefungen 28 korrespondierende Vorsprünge 30 aufweisen, wodurch sich die Verbindungsanordnung 16 formschlüssig und lösbar ausbilden lässt. Die Vertiefungen 28 und die hierzu korrespondierenden Vorsprünge 30 sind aus Darstellungsgründen mittels einer Schraffur kenntlich gemacht. Für den Fall, dass der zweite Verbindungsabschnitt 20 eine Anzahl von Erhöhungen 28 aufweist, kann der erste Verbindungsabschnitt 18 eine Anzahl von hierzu korrespondierenden Ausnehmungen 30 aufweisen. Auch hierdurch lässt sich eine lösbare formschlüssige Verbindung zwischen dem Zahnrad 14 und dem Bauteil 12 bereitstellen. Für den Fall, dass das Zahnrad 14 aus Kunststoff gefertigt ist, kann das Zahnrad 14 während der Fertigung bereits um das Bauteil 12 herum gespritzt werden. In diesem Fall wird keine zerstörungsfrei lösbare Verbindungsanordnung 16 zwischen dem Zahnrad 14 und dem Bauteil 12 geschaffen.

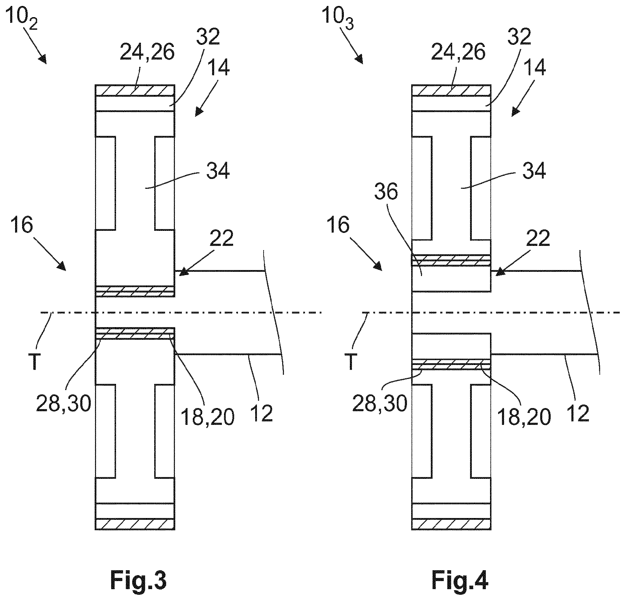

In Figur 3 ist ein zweites Ausführungsbeispiel der erfindungsgemäßen Vorrichtung 10₂ zum Übertragen einer Drehbewegung ebenfalls anhand einer prinzipiellen Schnittdarstellung gezeigt. Der grundsätzliche Aufbau der Vorrichtung 10₂ gemäß dem zweiten Ausführungsbeispiel gleicht demjenigen des ersten Ausführungsbeispiels 10₁. Allerdings weist das Zahnrad 14 in diesem Ausführungsbeispiel einen separaten Zahnkranz 32 auf, in welchem die Schrägverzahnung 26 angeordnet ist. Weiterhin weist das Zahnrad 14 ein Verbindungsteil 34 auf, welches den ersten Verbindungsabschnitt 18 bildet. Der Zahnkranz 32 ist dabei aus einem weicheren Material gefertigt als das Verbindungsteil 34.

In Figur 4 ist ein drittes Ausführungsbeispiel der erfindungsgemäßen Vorrichtung 10₃ wiederum anhand einer prinzipiellen Schnittdarstellung gezeigt. Wiederum gleicht der grundsätzliche Aufbau der Vorrichtung 10₁ denjenigen der zuvor dargestellten Ausführungsbeispiele. Wie auch im zweiten Ausführungsbeispiel umfasst Zahnrad 14 den Zahnkranz 32 und das Verbindungsteil 34. Das Bauteil 12 umfasst neben der Welle auch noch ein Nabenteil 36, welches den ersten Verbindungsabschnitt 18 bildet. Der Zahnkranz 32 ist dabei aus einem weichen Material gefertigt, wohingegen das Verbindungsteil 34 aus einem in Bezug auf das Material des Zahnkranzes 32 härteren Material und das Nabenteil 36 aus dem härtesten Material gefertigt. Im in Figur 4 dargestellten Ausführungsbeispiel ist das Nabenteil 36 aus Stahl gefertigt und mittels einer bekannten Pressverbindung mit der Welle 12 verbunden. Das Nabenteil 36 kann als Adapter zwischen dem Zahnrad 14 und der Welle des Bauteils 12 dienen, beispielsweise, um Durchmesserunterschiede auszugleichen.

Sowohl im zweiten als auch im dritten Ausführungsbeispiel bietet es sich an, dass das Zahnrad 14 aus Kunststoff gefertigt ist, wobei die unterschiedlichen Materialien so gewählt sind, dass die Funktionen des Zahnkranzes 32, des Verbindungsteils 34 und des Nabenteils 36 optimal erfüllt werden können. Das Bauteil 12, insbesondere als Welle, Nabe oder Buchse ausgeführt, ist üblicherweise aus Stahl gefertigt, kann aber auch aus Kunststoff gefertigt sein. Es kann sich dabei anbieten, das Nabenteil 36 und der Welle oder anderer Bestandteile des Bauteils 12 aus demselben Material zu fertigen, was deren Verbindung vereinfacht. Wenn die Welle und das Nabenteil 36 aus demselben Stahl gefertigt sind, können diese miteinander verschweißt oder mittels einer Presspassung miteinander verbunden werden.

In der Abwicklung entsprechen die zweiten Verbindungsabschnitte 20 dem in der Figur 3 dargestellten Bauteil 12 bzw. dem in Figur 4 dargestellten Nabenteil 36 und die in den Figuren 3 und 4 dargestellten Zahnräder 14 den Figuren 2a) und 2b). Insbesondere weisen sowohl der Verbindungsschrägungswinkel α als auch der Zahnschrägungswinkel β denselben Drehsinn R in Bezug auf die Drehachse T auf.

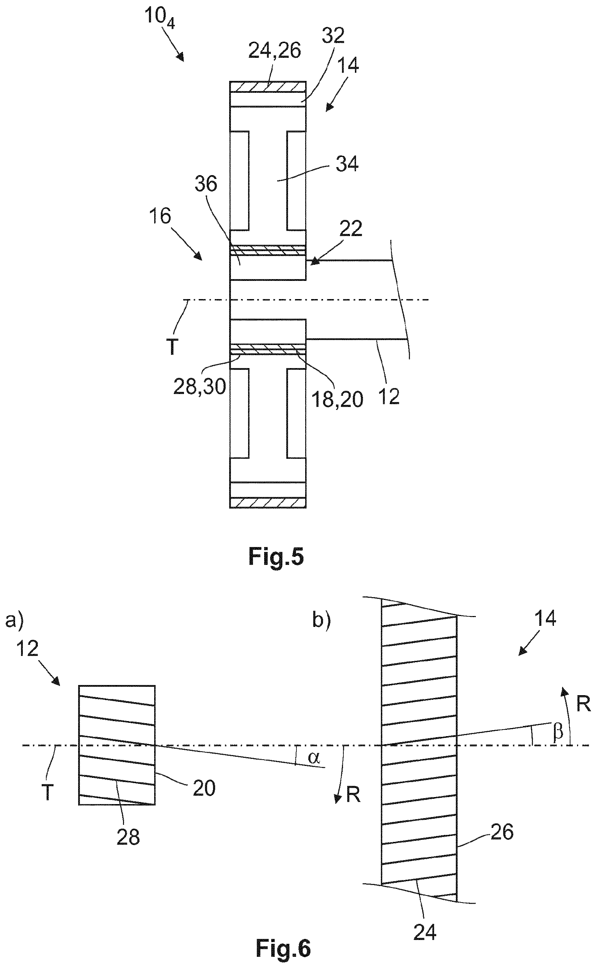

In Figur 5 ist ein viertes Ausführungsbeispiel nicht zur Erfindung gehörigen Vorrichtung 10₄ wiederum anhand einer prinzipiellen Schnittdarstellung gezeigt. Das vierte Ausführungsbeispiel entspricht im Wesentlichen dem in Figur 4 gezeigten dritten Ausführungsbeispiel, allerdings weisen der Zahnschrägungswinkel β und der Verbindungsschrägungswinkel α einen unterschiedlichen, entgegengesetzten Drehsinn R in Bezug auf die Drehachse T auf, was auch durch die für die Schrägverzahnung 26 und Vertiefungen 28 oder Erhöhungen 28 verwendeten Schraffuren symbolisiert ist, welche nicht parallel, sondern senkrecht zueinander verlaufen.

In Figur 6a) ist eine Abwicklung des zweiten Verbindungsabschnitts 20 des in Figur 5 gezeigten Nabenteils 36 und in Figur 5b) eine Abwicklung der in Figur 5 gezeigten Zahnrads 14, jeweils nach dem vierten Ausführungsbeispiel der nicht zur Erfindung gehörigen. Vorrichtung 10₄ dargestellt. Die gewählte Darstellungsweise entspricht derjenigen aus den Figuren 2a) und 2b). Im Gegensatz zu den Ausführungsbeispielen, auf welche sich die Figuren 2a) und 2b) beziehen, weisen der Zahnschrägungswinkel β und der Verbindungsschrägungswinkel α gemäß dem vierten Ausführungsbeispiel 10₄ einen unterschiedlichen, entgegengesetzten Drehsinn R in Bezug auf die Drehachse T auf.

Im Folgenden wird hergeleitet, warum der Verbindungsschrägungswinkel α kleiner order maximal gleich dem Zahnschrägungswinkel β zu wählen ist. Die Schrägverzahnung 26 ermöglicht nicht nur die Übertragung von tangential, sondern auch von axial wirkenden Kräften und Momenten. Die resultierenden auf die Schrägverzahnung 26 (Laufverzahnung) wirkenden Axialkräfte Fₐₛ wirken den zwischen den beiden Verbindungsabschnitten 18, 20 wirkenden Axialkräften Fₐᵥ (Mitnahmeverzahnung) entgegen. Es soll erreicht werden, dass die auf die Schrägverzahnung wirkenden Axialkräfte vom Betrag her nicht größer sind als die zwischen den beiden Verbindungsabschnitten 18, 20 wirkenden Kräfte. Die Beziehung der Axialkräfte Fₐₛ und Fₐᵥ kann durch folgende Formel ausgedrückt werden: ${F}_{aV} = {F}_{tV} tan α \leq {F}_{aS}$
- Fₐᵥ:: zwischen den Verbindungsabschnitten 18, 20 wirkende Axialkraft
- Fₜᵥ:: zwischen den Verbindungsabschnitten 18, 20 wirkende Tangentialkraft
- Fₐₛ:: auf die Schrägverzahnung 26 wirkenden Axialkraft

Die Tangentialkraft Fₜᵥ berechnet sich aus dem zu übertragenden Drehmoment und dem Durchmesser, an dem die Kraft angreift: ${F}_{tV} = 2 {M}_{Z} / {D}_{V}$
- M_{z}:: auf das Zahnrad wirkendes Moment
- Dᵥ:: Durchmesser bzw. Teilkreis der Verbindungsabschnitte 18, 20
- Dₛ:: Durchmesser bzw. Teilkreis der Schrägverzahnung 26

Dadurch wird die Verformung reduziert und die Leistungsfähigkeit des Zahnrads 14 gesteigert. Idealerweise sind ${F}_{aV} = {F}_{aS}$

Da die an der Schrägverzahnung 26 wirkenden Momente identisch sind zum Abstützmoment in den Verbindungsabschnitten 18, 20, ergibt sich der ideale Zahnschrägungswinkel ß dann wie folgt: $tan α = tan β {D}_{V} / {D}_{S}$

Da Dᵥ/Dₛ immer < 1, ist der Verbindungsschrägungswinkel α kleiner als der Zahnschrägungswinkel ß zu wählen.

### Bezugszeichenliste

- 10, 10₁ 10₃: Vorrichtung
- 12: Bauteil
- 14: Zahnrad
- 16: Verbindungsanordnung
- 18: erster Verbindungsabschnitt
- 20: zweiter Verbindungsabschnitt
- 22: Absatz
- 24: Zahn
- 26: Schrägverzahnung
- 28: Vertiefung, Erhöhung
- 30: Vorsprung, Ausnehmung
- 32: Zahnkranz
- 34: Verbindungsteil
- 36: Nabenteil

- R: Drehsinn
- T: Drehachse

- α: Verbindungsschrägungswinkel
- β: Zahnschrägungswinkel

## Patentansprüche

1. Vorrichtung zum Übertragen einer Drehbewegung, umfassend
- ein drehbares Bauteil (12) und
- ein Zahnrad (14), wobei
- das Zahnrad (14) und das Bauteil (12) mit einer Verbindungsanordnung (16) verbunden sind,
- das Zahnrad (14) eine Schrägverzahnung (26) mit einem auf die Drehachse des Zahnrads (14) gezogenen Zahnschrägungswinkel (β) und einen ersten Verbindungsabschnitt (18) und
- das Bauteil (12) einen zweiten Verbindungsabschnitt (20) aufweist, mit welchem das Bauteil (12) mit dem ersten Verbindungsabschnitt (18) verbunden ist, wobei das Bauteil (12) zumindest im zweiten Verbindungsabschnitt (20) zumindest eine mit dem ersten Verbindungsabschnitt (18) in Wirkverbindung stehende Vertiefung (28) oder Erhöhung (28) aufweist, wenn das Bauteil (12) mit ersten Verbindungsabschnitt (18) verbunden ist, und
- der erste Verbindungsabschnitt (18) mit der oder den Vertiefungen (28) korrespondierende Vorsprünge (30) oder mit der oder den Erhöhungen (28) korrespondierende Ausnehmungen (30) und die Vertiefung (28) oder die Erhöhung (28) einen auf die Drehachse des Zahnrads (14) gezogenen Verbindungsschrägungswinkel (α) aufweist,
**dadurch gekennzeichnet, dass** der Verbindungsschrägungswinkel (α) wie folgt definiert ist: $0 ° < α < β$
wobei der Verbindungsschrägungswinkel (α) und der Zahnschrägungswinkel (β) denselben Drehsinn (T) aufweisen.

2. Vorrichtung nach Anspruch 1,
**dadurch gekennzeichnet, dass** das Bauteil (12) im zweiten Verbindungsabschnitt (20) eine Anzahl von Vertiefungen (28) oder Erhöhungen (28) und die Schrägverzahnung (26) des Zahnrads (14) dieselbe Anzahl von Zähnen (24) aufweist.

3. Vorrichtung nach einem der vorherigen Ansprüche, **dadurch gekennzeichnet, dass** das Zahnrad (14) aus einem weicheren Material gefertigt ist als das Bauteil (12).

4. Vorrichtung nach einem der vorherigen Ansprüche, **dadurch gekennzeichnet, dass** das Zahnrad (14) einen Zahnkranz (32), in welchem die Schrägverzahnung (26) angeordnet ist, und ein Verbindungsteil (34), welches den ersten Verbindungsabschnitt (18) umfasst, aufweist, und der Zahnkranz (32) aus einem weicheren Material als das Verbindungsteil (34) gefertigt ist.

5. Vorrichtung nach Anspruch 4,
**dadurch gekennzeichnet, dass** das Bauteil (12) ein Nabenteil (36) aufweist, welches den zweiten Verbindungsabschnitt (20) umfasst, und das Verbindungsteil (34) zwischen dem Zahnkranz (32) und dem Nabenteil (36) angeordnet ist, und der Zahnkranz (32) aus einem weicheren Material als das Verbindungsteil (34) und das Verbindungsteil (34) aus einem weicheren Material als das Nabenteil (36) gefertigt sind.

6. Elektrische Lenkreinrichtung für ein Kraftfahrzeug, umfassend eine Vorrichtung (10) nach einem der vorherigen Ansprüche.

## Claims

1. A device for transmitting a rotary motion, comprising
- a rotatable component (12) and
- a gear (14), wherein
- the gear (14) and the component (12) are connected to a connection assembly (16),
- the gear (14) has a helical gear (26) with a tooth helix angle (β) drawn onto the axis of rotation of the gear (14) and a first connecting section (18) and
- the component (12) has a second connecting section (20) with which the component (12) is connected to the first connecting section (18), wherein the component (12) has at least in the second connecting section (20) at least one depression (28) or elevation (28) that is in operative connection with the first connecting section (18) when the component (12) is connected to the first connecting section (18), and
- the first connecting section (18) has projections (30) corresponding to the one or more depressions (28) or recesses (30) corresponding to the elevations (28) and the depression (28) or the elevation (28) has a connecting helix angle (α) drawn onto the axis of rotation of the gear (14),
**characterized in that** the connecting helix angle (α) is defined as follows: $0 ° < α < β$
wherein the connecting helix angle (α) and the tooth helix angle (β) have the same direction of rotation (T).

2. The device according to claim 1,
**characterized in that** the component (12) in the second connecting section (20) has a number of depressions (28) or elevations (28) and the helical gear (26) of the gear (14) has the same number of teeth (24).

3. The device according to any one of the preceding claims, **characterized in that** the gear (14) is made of a softer material than the component (12).

4. The device according to any one of the preceding claims, **characterized in that** the gear (14) has a gear ring (32) in which the helical gear (26) is arranged, and a connecting part (34) which comprises the first connecting section (18), and the gear ring (32) is made of a softer material than the connecting part (34).

5. The device according to claim 4,
**characterized in that** the component (12) has a hub part (36) which comprises the second connecting section (20), and the connecting part (34) is arranged between the gear ring (32) and the hub part (36), and the gear ring (32) is made of a softer material than the connecting part (34) and the connecting part (34) is made of a softer material than the hub part (36).

6. An electric steering device for a motor vehicle, comprising a device (10) according to any one of the preceding claims.

## Revendications

1. Dispositif de transmission d'un mouvement de rotation comprenant :
- un composant rotatif (12), et
- une roue dentée (14),
- la roue dentée (14) et le composant (12) étant reliés par un dispositif de liaison (16),
- la roue dentée (14) a une denture hélicoïdale (26) d'angle (β) par rapport à l'axe de rotation de la roue dentée (14) ainsi qu'un premier segment de liaison (18), et
- le composant (12) a un second segment de liaison (20), par lequel il est relié au premier segment de liaison (18), le composant (12), ayant au moins dans le second segment (20), au moins une cavité (28) ou un relief (28) coopérant avec le premier segment de liaison (18) lorsque le composant (12) est relié au premier segment de liaison (18), et
- le premier segment (18) de liaison a des saillies (30) correspondant à la ou aux cavités (28) ou des évidements (30) correspondant à le ou aux reliefs (28) et la cavité (28) ou le relief (28) a un angle d'inclinaison (α) par rapport à l'axe de rotation de la roue dentée (14),
**caractérisé en ce que** l'angle d'inclinaison de liaison (α) est défini comme suit : $0 ° < α < β ,$
dans lequel l'angle d'inclinaison de liaison (α) et l'angle de denture (β) ont ce même sens de rotation (T).

2. Dispositif selon la revendication 1,
**caractérisé en ce que**, dans le second segment de liaison (20), le composant (12) a un nombre de cavités (28) ou de reliefs (28) et la denture hélicoïdale (26) de la roue dentée (14) a le même nombre de dents (24).

3. Dispositif selon l'une des revendications précédentes,
**caractérisé en ce que** la roue dentée (14) est réalisée en un matériau moins dur que le composant (12).

4. Dispositif selon l'une des revendications précédentes,
**caractérisé en ce que** la roue dentée (14) comporte une couronne dentée (32), dans laquelle la denture hélicoïdale (26) est montée et une partie de liaison (34) avec le premier segment de liaison (18), la couronne dentée (32) étant réalisée en un matériau moins dur que la pièce de liaison (34).

5. Dispositif selon la revendication 4,
**caractérisé en ce que** le composant (12) comporte une partie de moyeu (36) qui comprend le second segment de liaison (20) et la pièce de liaison (34) disposée entre la couronne dentée (32) et la partie de moyeu (36), la couronne dentée (32) étant en un matériau moins dur que la pièce de liaison (34) et la pièce de liaison (34) étant en un matériau moins dur que la partie de moyeu (36).

6. Installation de direction électrique pour un véhicule automobile, comprenant un dispositif (10) selon l'une des revendications précédentes.
